# FASCICULE DE BREVET EUROPEEN

(11) **EP 3 868 649 B1**
(45) Date de publication et mention de la délivrance du brevet: **20.04.2022**
(21) Numéro de dépôt: 21155444.9
(22) Date de dépôt: 05.02.2021
(51) Int. Cl.: B64C 1/18, B64D 45/00

(54) **AERONEF COMPORTANT UN PLANCHER ET UNE TRAPPE ANTI-FEU ET/OU ANTIFUMEE**
LUFTFAHRZEUG, DAS MIT EINEM BODEN UND EINER BRANDSCHUTZ- UND/ODER RAUCHSCHUTZ-KLAPPE AUSGESTATTET IST
AIRCRAFT INCLUDING A FLOOR AND A FIREPROOF AND/OR SMOKE-TIGHT HATCH

(30) Priorité: 24.02.2020 FR 2001812
(43) Date de publication de la demande: 25.08.2021
(73) Titulaire: AIRBUS OPERATIONS (S.A.S.), 31060 Toulouse (FR)
(72) Inventeur: CASSE, Christophe, 31060 TOULOUSE Cedex 9 (FR)
(74) Mandataire: Gicquel, Olivier Yves Gérard

(56) Documents cités:
- US-A- 5 897 079
- US-A1- 2009 179 110
- US-B1- 6 491 254

## Description

### DOMAINE TECHNIQUE

La présente invention concerne un aéronef comportant un fuselage avec un plancher et des ouvertures permettant le passage d'un flux d'air entre l'espace au-dessus du plancher et l'espace au-dessous du plancher et un système d'obturation destiné à obturer les ouvertures en cas de présence d'un flux gazeux à haute température, que ce flux provienne d'un feu ou que ce soit des fumées chaudes.

### ETAT DE LA TECHNIQUE ANTERIEURE

Un aéronef, en particulier un aéronef commercial, comporte classiquement un fuselage dans lequel est installé un plancher qui sépare le volume intérieur du fuselage en un espace passager au-dessus du plancher et une soute au-dessous du plancher.

Le document US 5 897 079 A divulgue un tel aéronef selon l'art antérieur.

Pour assurer un flux d'air dans l'espace passager, le plancher présente des ouvertures qui permettent la communication entre l'espace passager et la soute. L'air frais est ainsi introduit dans l'espace passager par des bouches d'aération, et l'air vicié est évacué par les ouvertures dans le plancher.

Avec une telle installation, il est nécessaire de prévoir un système de protection si un flux gazeux à haute température comme des fumées est présent dans la soute, pour éviter que ce flux gazeux arrive jusqu'à l'espace passager.

### EXPOSE DE L'INVENTION

Un objet de la présente invention est de proposer un aéronef comportant un fuselage avec un plancher et des ouvertures permettant le passage d'un flux d'air entre l'espace passager au-dessus du plancher et la soute au-dessous du plancher et un système d'obturation destiné à obturer les ouvertures si un flux gazeux présentant une température élevée parvient au niveau de ces ouvertures.

A cet effet, est proposé un aéronef comportant :
- une structure,
- un fuselage fixé à la structure,
- un plancher fixé à la structure et installé dans le fuselage, séparant un volume intérieur du fuselage en un espace passager au-dessus du plancher et une soute au-dessous du plancher, et où le plancher présente des ouvertures entre l'espace passager et la soute.

Selon l'invention, pour chaque ouverture, l'aéronef comporte un système d'obturation comportant une trappe montée articulée sur la structure entre une position d'attente dans laquelle la trappe n'obture pas l'ouverture et une position de protection dans laquelle la trappe obture l'ouverture, des moyens de rappel qui contraignent la trappe en position de protection et un élément de retenue qui maintient la trappe dans la position d'attente et qui se rompt lorsque sa température dépasse sa température de fusion.

Ainsi, lorsqu'un flux gazeux à haute température parvient au niveau de l'élément de retenue et que cette haute température est supérieure à la température de fusion de l'élément de retenue, celui-ci se rompt et libère la trappe qui obture l'ouverture.

Selon un mode de réalisation particulier, le système d'obturation comporte une plaque pliable constituée de la trappe et d'une partie fixe, la partie fixe étant fixée à la structure, la trappe se prolonge par la partie fixe qui est solidaire de la trappe le long d'une ligne de pliage, la trappe est pliée par rapport à la partie fixe le long de la ligne de pliage en position d'attente de la trappe, de manière à former un pliage, la ligne d'articulation de la trappe correspond à la ligne de pliage, et le pliage de la trappe en position d'attente de la trappe correspond à une déformation élastique.

Selon un autre mode de réalisation particulier, la trappe est fixée à la structure par l'intermédiaire d'une charnière, et les moyens de rappel sont constitués par un ressort qui contraint la trappe en position de protection.

Avantageusement, l'élément de retenue est constitué d'au moins une tige qui est fixée entre la trappe et la structure ou la partie fixe.

Avantageusement, l'élément de retenue est constitué de première et deuxième tiges, chaque première et deuxième tiges comportant des première et deuxième extrémités, la trappe comporte un bord libre, ledit bord libre comportant deux extrémités, la première extrémité de la première tige est fixée à l'une des deux extrémités du bord libre de la trappe, la première extrémité de la deuxième tige est fixée à l'autre des deux extrémités dudit bord libre, la deuxième extrémité de la première tige et la première extrémité de la deuxième tige sont globalement en regard l'une de l'autre, et la deuxième extrémité de la deuxième tige et la première extrémité de la première tige sont globalement en regard l'une de l'autre.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de face et en coupe d'un aéronef selon l'invention,
Fig. 2 est un agrandissement d'un système d'obturation en position d'attente,
Fig. 3 est une vue similaire à la Fig. 2 en position de protection, et
Fig. 4 est une vue du système d'obturation selon la flèche IV de la Fig. 2.

### EXPOSE DETAILLE DE MODES DE REALISATION

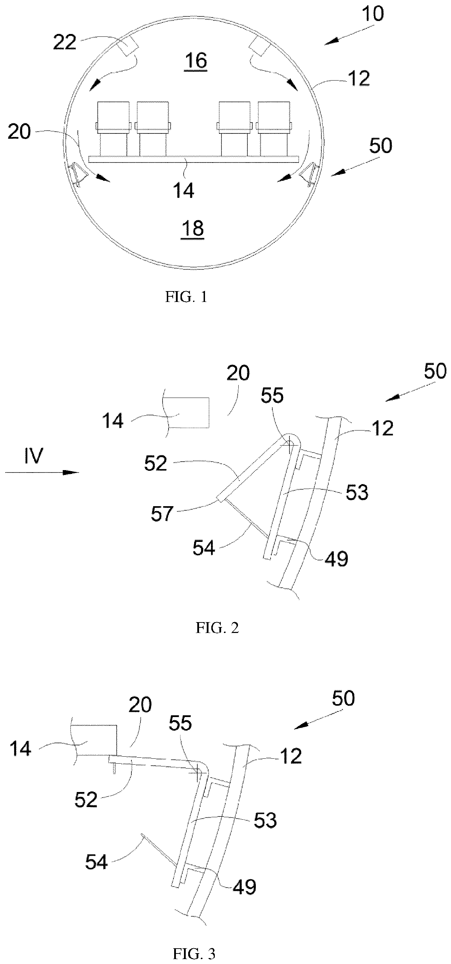

La Fig. 1 montre un aéronef 10 qui comporte une structure (49, Fig. 2), un fuselage 12 fixé à la structure 49 et dans lequel est installé un plancher 14 qui est fixé à la structure 49 et qui sépare le volume intérieur du fuselage 12 en un espace passager 16 au-dessus du plancher 12 et une soute 18 au-dessous du plancher 12.

Pour assurer un flux d'air dans l'espace passager 16, le plancher 14 présente des ouvertures 20 qui permettent la communication entre l'espace passager 16 et la soute 18. Dans le mode de réalisation de l'invention présenté à la Fig. 1, les ouvertures 20 sont réalisées aux extrémités du plancher 14, mais elles peuvent être réalisées ailleurs dans le plancher 14.

L'air frais est ainsi introduit dans l'espace passager 16 par des bouches d'aération 22, et l'air vicié est évacué par les ouvertures 20 dans le plancher 14.

L'air circule ainsi des bouches d'aération 22 vers l'espace passager 16, puis à travers les ouvertures 20 vers la soute 18.

Pour éviter qu'un flux gazeux à haute température, comme par exemple des fumées, se propage de la soute 18 vers l'espace passager 16, pour chaque ouverture 20, l'aéronef 10 comporte un système d'obturation 50.

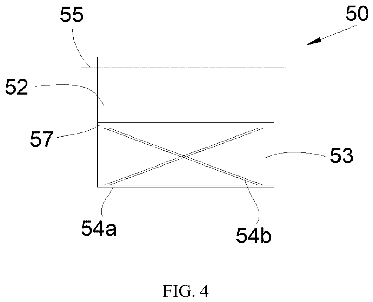

La Fig. 2 et la Fig. 4 montrent le système d'obturation 50 dans une première position dans laquelle il n'empêche pas le passage de l'air et la Fig. 3 montre le système d'obturation 50 dans une deuxième position dans laquelle il empêche le passage de l'air, d'un éventuel flux gazeux à haute température, de fumées et d'un feu.

Le système d'obturation 50 comporte une trappe 52 qui est montée articulée le long d'une ligne d'articulation 55 sur la structure 49 et qui est mobile entre une position d'attente et une position de protection. Pour une meilleure protection au feu, la trappe 52 est réalisée dans un matériau résistant à la chaleur, et en particulier au feu, comme par exemple en métal, en titane ou en Inconel^{®} par exemple.

Dans la position d'attente, la trappe 52 n'obture pas l'ouverture 20 ce qui permet le passage de l'air, en particulier de l'air provenant de l'espace passager 16. Cette position d'attente correspond à la première position du système d'obturation 50.

Dans la position de protection, la trappe 52 obture l'ouverture 20 ce qui empêche le passage de l'air et plus particulièrement d'un flux gazeux à température élevée et donc des fumées. Cette position de protection correspond à la deuxième position du système d'obturation 50.

Le système d'obturation 50 comporte également des moyens de rappel qui contraignent la trappe 52 en position de protection et un élément de retenue 54 qui maintient la trappe 52 dans la position d'attente et qui se rompt lorsque sa température dépasse une température seuil. La température seuil correspond à la température à laquelle l'élément de retenue 54 fond et qui est atteint lorsqu'un incendie se déclenche. La température seuil est la température de fusion de l'élément de retenue 54.

Ainsi, tant que la température est inférieure à la température seuil, l'élément de retenue 54 reste en l'état et maintient la trappe 52 en position d'attente et lorsque la température devient supérieure à la température seuil, l'élément de retenue 54 se rompt et relâche la trappe 52 qui se positionne en position de protection en obturant l'ouverture 20 ce qui évite l'introduction du flux gazeux à haute température, de fumée et du feu dans l'espace passager 16.

Un tel système d'obturation 50 est simple et peu onéreux à mettre en œuvre.

Dans le mode de réalisation de l'invention présenté ici, le système d'obturation 50 est disposé sous le plancher 14 et, en position d'attente, la trappe 52 est abaissée. En position de protection, la trappe 52 se relève et vient en appui sous le plancher 14.

Dans le mode de réalisation présenté sur les Figs. 1 à 4, la trappe 52 se prolonge par une partie fixe 53 qui est fixée à la structure 49 et qui est solidaire de la trappe 52 le long d'une ligne de pliage et la ligne d'articulation 55 de la trappe 52 correspond à la ligne de pliage entre la trappe 52 et la partie fixe 53. La trappe 52 et la partie fixe 53 constituent ensemble une plaque pliable. Dans ce mode de réalisation, la trappe 52 est ainsi fixée indirectement à la structure 49 par l'intermédiaire de la partie fixe 53.

Dans la position d'attente, la trappe 52 est pliée par rapport à la partie fixe 53 le long de la ligne de pliage, et dans la position de protection, la trappe 52 est dépliée. En position d'attente, la trappe 52 forme ainsi un pliage.

Les moyens de rappel sont alors constitués par la structure interne de la plaque pliable elle-même et par le fait que le pliage en position d'attente de la trappe 52 correspond à une déformation élastique de la plaque pliable, c'est-à-dire que lorsque la trappe 52 n'est pas contrainte dans la position d'attente, elle se déplie et revient en position de protection. Autrement dit, une partie de la trappe 52, le long de la ligne de pliage, subit une déformation élastique en position d'attente de la trappe 52.

Dans ce mode de réalisation, la plaque pliable est par exemple une lame métallique élastique. Dans un autre mode de réalisation, la ligne de pliage est remplacée par une charnière et la trappe 52 est alors fixée à la structure 49 par l'intermédiaire de la charnière et la ligne d'articulation 55 est l'axe de la charnière. Les moyens de rappel sont constitués par exemple par un ressort qui contraint la trappe 52 en position de protection.

Selon un mode de réalisation particulier, l'élément de retenue 54 est constitué d'au moins une tige par exemple en plastique où chacune est fixée entre la trappe 52 et la structure 49 ou la partie fixe 53.

La Fig. 4 montre un mode de réalisation particulier, dans lequel l'élément de retenue 54 est constitué de deux tiges 54a-b où une extrémité de chaque tige 54a-b est fixée à la trappe 52 et où l'autre extrémité de chaque tige 54a-b est fixée à la partie fixe 53, mais pourrait être fixée à la structure 49.

Le bord libre 57 de la trappe 52, c'est-à-dire le bord de la trappe 52 qui n'est pas fixé à une tige 54a-b, s'étend parallèlement à la ligne d'articulation 55, la première extrémité de la première tige 54a est fixée à l'une des extrémités dudit bord libre 57 et la première extrémité de la deuxième tige 54b est fixée à l'autre extrémité dudit bord libre 57.

La deuxième extrémité de la première tige 54a et la première extrémité de la deuxième tige 54b sont globalement en regard l'une de l'autre, c'est-à-dire qu'elles sont globalement coplanaires par rapport à un plan perpendiculaire à la ligne d'articulation.

La deuxième extrémité de la deuxième tige 54b et la première extrémité de la première tige 54a sont globalement en regard l'une de l'autre, c'est-à-dire qu'elles sont globalement coplanaires par rapport à un plan perpendiculaire à la ligne d'articulation.

Les termes « globalement » s'entendent ici dans le sens où les deux tiges 54a-b couvrent au maximum l'étendue de la trappe 52 parallèlement à la ligne d'articulation 55.

Ainsi, les deux tiges 54a-b se croisent, et quelle que soit la position du feu le long de la ligne d'articulation 55, les deux tiges 54a-b seront forcément impactées simultanément et vont se rompre pour libérer la trappe 52.

## Revendications

1. Aéronef (10) comportant :
- une structure (49),
- un fuselage (12) fixé à la structure (49),
- un plancher (14) fixé à la structure (49) et installé dans le fuselage (12), séparant un volume intérieur du fuselage (12) en un espace passager (16) au-dessus du plancher (12) et une soute (18) au-dessous du plancher (12), et où le plancher (14) présente des ouvertures (20) entre l'espace passager (16) et la soute (18), et
**caractérisé en ce que**, pour chaque ouverture (20), ledit aéronef comporte un système d'obturation (50) comportant une trappe (52) montée articulée sur la structure (49) le long d'une ligne d'articulation (55) entre une position d'attente dans laquelle la trappe (52) n'obture pas l'ouverture (20) et une position de protection dans laquelle la trappe (52) obture l'ouverture (20), des moyens de rappel qui contraignent la trappe (52) en position de protection et un élément de retenue (54) qui maintient la trappe (52) dans la position d'attente et qui se rompt lorsque sa température dépasse sa température de fusion.

2. Aéronef (10) selon la revendication 1, **caractérisé en ce que** le système d'obturation (50) comporte une plaque pliable constituée de la trappe (52) et d'une partie fixe (53), la partie fixe (53) étant fixée à la structure (49), la trappe (52) se prolonge par la partie fixe (53) qui qui est solidaire de la trappe (52) le long d'une ligne de pliage, la trappe (52) est pliée par rapport à la partie fixe (53) le long de la ligne de pliage en position d'attente de la trappe (52), de manière à former un pliage, **en ce que** la ligne d'articulation (55) de la trappe (52) correspond à la ligne de pliage, et **en ce que** le pliage de la trappe (52) en position d'attente de la trappe (52) correspond à une déformation élastique.

3. Aéronef (10) selon la revendication 2, **caractérisé en ce que** l'élément de retenue (54) est constitué d'au moins une tige qui est fixée entre la trappe (52) et la structure (49) ou la partie fixe (53).

4. Aéronef (10) selon la revendication 1, **caractérisé en ce que** la trappe (52) est fixée à la structure (49) par l'intermédiaire d'une charnière, et **en ce que** les moyens de rappel sont constitués par un ressort qui contraint la trappe (52) en position de protection.

5. Aéronef (10) selon la revendication 4, **caractérisé en ce que** l'élément de retenue (54) est constitué d'au moins une tige qui est fixée entre la trappe (52) et la structure (49).

6. Aéronef (10) selon l'une des revendications 3 ou 5, **caractérisé en ce que** l'élément de retenue (54) est constitué de première et deuxième tiges (54a-b), chaque première et deuxième tiges (54a-b) comportant des première et deuxième extrémités, **en ce que** la trappe (52) comporte un bord libre (57), ledit bord libre (57) comportant deux extrémités, **en ce que** la première extrémité de la première tige (54a) est fixée à l'une des deux extrémités du bord libre (57) de la trappe (52), **en ce que** la première extrémité de la deuxième tige (54b) est fixée à l'autre des deux extrémités dudit bord libre (57), **en ce que** la deuxième extrémité de la première tige (54a) et la première extrémité de la deuxième tige (54b) sont globalement en regard l'une de l'autre, et **en ce que** la deuxième extrémité de la deuxième tige (54b) et la première extrémité de la première tige (54a) sont globalement en regard l'une de l'autre.

## Patentansprüche

1. Luftfahrzeug (10), welches aufweist:
- eine Struktur (49),
- einen Rumpf (12), der an der Struktur (49) befestigt ist,
- einen Boden (14), der an der Struktur (49) befestigt und in den Rumpf (12) eingebaut ist und der ein Innenvolumen des Rumpfes (12) in eine Passagierkabine (16) oberhalb des Bodens (12) und einen Frachtraum (18) unterhalb des Bodens (12) trennt, wobei der Boden (14) Öffnungen (20) zwischen der Passagierkabine (16) und dem Frachtraum (18) aufweist, und
**dadurch gekennzeichnet, dass** für jede Öffnung (20) das Luftfahrzeug ein Verschlusssystem (50) aufweist, das eine Klappe (52), die an der Struktur (49) entlang einer Gelenklinie (55) zwischen einer Warteposition, in welcher die Klappe (52) die Öffnung (20) nicht verschließt, und einer Schutzposition, in welcher die Klappe (52) die Öffnung (20) verschließt, gelenkig bewegbar angebracht ist, Rückstellmittel, welche die Klappe (52) in die Schutzposition drücken, und ein Halteelement (54), welches die Klappe (52) in der Warteposition hält und welches bricht, wenn seine Temperatur seine Schmelztemperatur überschreitet, aufweist.

2. Luftfahrzeug (10) nach Anspruch 1, **dadurch gekennzeichnet, dass** das Verschlusssystem (50) eine biegbare Platte aufweist, die aus der Klappe (52) und einem ortsfesten Teil (53) besteht, wobei der ortsfeste Teil (53) an der Struktur (49) befestigt ist, die Klappe (52) durch den ortsfesten Teil (53) verlängert wird, welcher mit der Klappe (52) entlang einer Biegelinie fest verbunden ist, und die Klappe (52) in der Warteposition der Klappe (52) bezüglich des ortsfasten Teils (53) umgebogen ist, so dass eine Biegung gebildet wird, dadurch, dass die Gelenklinie (55) der Klappe (52) der Biegelinie entspricht, und dadurch, dass die Biegung der Klappe (52) in der Warteposition der Klappe (52) einer elastischen Verformung entspricht.

3. Luftfahrzeug (10) nach Anspruch 2, **dadurch gekennzeichnet, dass** das Halteelement (54) aus wenigstens einer Stange besteht, welche zwischen der Klappe (52) und der Struktur (49) oder dem ortsfesten Teil (53) befestigt ist.

4. Luftfahrzeug (10) nach Anspruch 1, **dadurch gekennzeichnet, dass** die Klappe (52) an der Struktur (49) durch ein Drehgelenk befestigt ist, und dadurch, dass die Rückstellmittel aus einer Feder bestehen, welche die Klappe (52) in die Schutzposition drückt.

5. Luftfahrzeug (10) nach Anspruch 4, **dadurch gekennzeichnet, dass** das Halteelement (54) aus wenigstens einer Stange besteht, welche zwischen der Klappe (52) und der Struktur (49) befestigt ist.

6. Luftfahrzeug (10) nach einem der Ansprüche 3 oder 5, **dadurch gekennzeichnet, dass** das Halteelement (54) aus einer ersten und einer zweiten Stange (54a-b) besteht, wobei die erste und die zweite Stange (54a-b) jeweils ein erstes und ein zweites Ende aufweisen, dadurch, dass die Klappe (52) einen freien Rand (57) aufweist, wobei der freie Rand (57) zwei Enden aufweist, dadurch, dass das erste Ende der ersten Stange (54a) an einem der zwei Enden des freien Randes (57) der Klappe (52) befestigt ist, dadurch, dass das erste Ende der zweiten Stange (54b) an dem anderen der zwei Enden des freien Randes (57) befestigt ist, dadurch, dass das zweite Ende der ersten Stange (54a) und das erste Ende der zweiten Stange (54b) im Wesentlichen einander gegenüberliegen, und dadurch, dass das zweite Ende der zweiten Stange (54b) und das erste Ende der ersten Stange (54a) im Wesentlichen einander gegenüberliegen.

## Claims

1. Aircraft (10) having:
- a structure (49),
- a fuselage (12) fixed to the structure (49),
- a floor (14) fixed to the structure (49) and installed in the fuselage (12), separating an interior volume of the fuselage (12) into a passenger space (16) above the floor (12) and a hold (18) beneath the floor (12), wherein the floor (14) has openings (20) between the passenger space (16) and the hold (18), and
**characterized in that**, for each opening (20), said aircraft has a shut-off system (50) having a flap (52) mounted on the structure (49) in a manner hinged along a hinge line (55) between a standby position in which the flap (52) does not shut off the opening (20) and a protective position in which the flap (52) shuts off the opening (20), return means that urge the flap (52) into the protective position and a retaining element (54) that keeps the flap (52) in the standby position and breaks when its temperature exceeds its melting point.

2. Aircraft (10) according to Claim 1, **characterized in that** the shut-off system (50) has a foldable plate made up of the flap (52) and of a fixed part (53), the fixed part (53) being fixed to the structure (49), the flap (52) is extended by the fixed part (53), which is joined to the flap (52) along a fold line, the flap (52) is folded with respect to the fixed part (53) along the fold line when the flap (52) is in the standby position, so as to form a fold, **in that** the hinge line (55) of the flap (52) corresponds to the fold line, and **in that** the folding of the flap (52) when the flap (52) is in the standby position corresponds to an elastic deformation.

3. Aircraft (10) according to Claim 2, **characterized in that** the retaining element (54) is made up of at least one rod that is fixed between the flap (52) and the structure (49) or the fixed part (53).

4. Aircraft (10) according to Claim 1, **characterized in that** the flap (52) is fixed to the structure (49) by way of a hinge, and **in that** the return means are formed by a spring that urges the flap (52) into the protective position.

5. Aircraft (10) according to Claim 4, **characterized in that** the retaining element (54) is made up of at least one rod that is fixed between the flap (52) and the structure (49).

6. Aircraft (10) according to either of Claims 3 and 5, **characterized in that** the retaining element (54) is made up of a first and a second rod (54a-b), each first and second rod (54a-b) having a first and a second end, **in that** the flap (52) has a free edge (57), said free edge (57) having two ends, **in that** the first end of the first rod (54a) is fixed to one of the two ends of the free edge (57) of the flap (52), **in that** the first end of the second rod (54b) is fixed to the other of the two ends of said free edge (57), **in that** the second end of the first rod (54a) and the first end of the second rod (54b) are generally opposite one another, and **in that** the second end of the second rod (54b) and the first end of the first rod (54a) are generally opposite one another.
